# EUROPÄISCHE PATENTANMELDUNG

(11) **EP 4 171 058 A1**
(43) Veröffentlichungstag der Anmeldung: **26.04.2023**
(21) Anmeldenummer: 22201241.1
(22) Anmeldetag: 13.10.2022
(51) Int. Cl.: H04R 1/02, H04R 1/08, H05B 47/12, G10L 15/30

(54) **VORRICHTUNG MIT EINEM LAMPENSOCKEL**

(30) Priorität: 25.10.2021 DE 102021211968; 12.10.2022 DE 102022210743
(71) Anmelder: Robert Bosch GmbH, 70442 Stuttgart (DE)
(72) Erfinder: Haeussermann, Kai, 73630 Remshalden (DE)

(57) **Zusammenfassung**

Die Erfindung betrifft eine Vorrichtung (1) mit einem Lampensockel (20), wobei der Lampensockel vorgesehen ist, einen mechanischen und elektrischen Kontakt zu einer Lampenfassung herzustellen, und wobei die Vorrichtung (1) eine Kommunikationseinheit (40) zum drahtlosen oder drahtgebundenen Kommunizieren aufweist. Es wird vorgeschlagen, dass die Vorrichtung (1) eine Verarbeitungseinheit (50) und zumindest ein Mikrofon (5) aufweist, wobei das mindestens eine Mikrofon (5) ausgebildet und eingerichtet ist ein Sprachsignal zu erfassen und dieses an die Verarbeitungseinheit (50) zur Sprachverarbeitung weiterzuleiten.

## Beschreibung

Die Erfindung betrifft eine Vorrichtung mit einem Lampensockel.

### Stand der Technik

Es sind mehrere Geräte zur Spracherkennung bekannt. Meist weisen diese Lautsprecher zu Musikausgabe und Displays zur Anzeige von Informationen auf. Die Geräte sind sehr groß und können daher nicht dezent im Raum versteckt werden.

### Offenbarung der Erfindung

Vorteilhaft ist, dass die Vorrichtung einen Lampensockel aufweist. Der Lampensockel ist vorgesehen und ausgebildet einen mechanischen und elektrischen Kontakt zu einer Lampenfassung herzustellen. Vorzugsweise ist der Lampensockel kompatibel mit beliebigen auf dem Markt verfügbaren Lampenfassungen, wie Exx, Gx, GUxx, GYx.x, Tx. Ferner ist vorteilhaft, dass die Vorrichtung eine Kommunikationseinheit zum Kommunizieren aufweist. Die Kommunikationseinheit kann insbesondere mit einem Sprachverarbeitungsserver und/oder einem steuerbaren Gerät kommunizieren, insbesondere ist sie aber nicht hierauf beschränkt. Insbesondere handelt es sich bei den Sprachverarbeitungsserver um einen Server, ein Cloudsystem, vorzugsweise um ein zentral ausgebildetes Computersystem zur Sprachverarbeiten. Insbesondere wird auf dem Sprachverarbeitungsserver die Sprachsignale von mehr als einem Gerät, hier insbesondere Lampensockel verarbeitet. Insbesondere handelt es sich bei steuerbaren Geräten um Smart Home Geräte oder mobile Geräte, wie insbesondere Smartphones, Smart Watches oder Tabletts. Besonders vorteilhaft ist, dass die Vorrichtung eine Verarbeitungseinheit und mindestens ein Mikrofon aufweisen. Das Mikrofon ist ausgebildet Sprachsignale, insbesondere Spracheingaben, zu erfassen und diese an die Verarbeitungseinheit weiterzuleiten. Vorteilhaft ist, dass eine Spracherfassung so einfach umgesetzt und an beliebigen Stellen eingesetzt werden kann.

Smart Home Geräte sind Haustechniksteuerungsgeräte, Installationsgeräte, Haustechnikgeräte, Haushaltsgerät, Gartengeräte, Informations- und Kommunikationselektronikgerät und/oder Unterhaltungselektronikgerät, die eine Kommunikationsschnittstelle aufweisen, welche es ihnen erlaubt mit anderen Smart Home Geräten oder auch Geräten zu kommunizieren.

Die Smart Home Geräte, sind untereinander vernetzt und können Signale, insbesondere, Nachrichten, Datenpakete, Informationen, Steuerbefehle und/oder Umgebungsgrößen usw. empfangen und/oder senden.

Durch die in den Unteransprüchen aufgeführten Maßnahmen ergeben sich vorteilhafte Weiterbildungen und Verbesserungen der im Hauptanspruch angegebenen Merkmale.

Eine vorteilhafte Weiterbildung zeichnet sich dadurch aus, dass die Verarbeitungseinheit mittels Sprachverarbeitung ausgebildet und eingerichtet ist, aus dem erfassten Sprachsignal, insbesondere der erfassten Spracheingabe, Anforderungen zu ermitteln. Eine Anforderung enthält einen Steuerbefehl für ein steuerbares Gerät und/oder eine Auswahl zumindest eines steuerbaren Geräts. Ein Sprachsignal, insbesondere eine Spracheingabe, muss eine Anforderung oder eine Auswahl jedoch nicht enthalten. Es gibt auch die Möglichkeit, dass der Anwender lediglich kommuniziert, ohne einen Steuerbefehl oder eine Geräteauswahl auszusprechen. In solch einem Fall enthält das Sprachsignal, insbesondere die Spracheingabe, zwar Sprache jedoch keine Anforderung.

Die ermittelten Steuerbefehle werden insbesondere mittels der Kommunikationseinheit an das optional ausgewählte steuerbare Gerät, insbesondere ein Smart Home Gerät, gesendet. Ist das ausgewählte Gerät die Vorrichtung selbst, so wird der Steuerbefehl ausgeführt und/oder alternativ zu einem optionalen Lichterzeuger, bzw. dessen Treiber gesendet. Ein Senden des Steuerbefehls über die Kommunikationsschnittstelle ist hier nicht notwendig.

Vorzugsweise weist die Verarbeitungseinheit insbesondere einen Mikroprozessor zur Sprachverarbeitung auf. Die Bandbreite, welche die Kommunikationseinheit benötigt, ist hierbei sehr gering, da lediglich die Steuerbefehle und kein Audiosignal gesendet wird.

Eine vorteilhafte Weiterbildung ist, dass die Verarbeitungseinheit ausgebildet und eingerichtet ist, die erfassten Sprachsignale in Kommunikationssignale umzuwandeln. Die Umwandlung erfolgt insbesondere mittels Filtern und/oder Selektion und/oder Codierung. Die umgewandelten Kommunikationssignale werden mittels der Kommunikationseinheit an zumindest einen Sprachverarbeitungsserver zur Sprachverarbeitung, insbesondere einen Server oder ein Cloud-System, gesendet. Der Server oder ein Cloud-System ist insbesondere ausgebildet und eingerichtet, Anforderungen aus dem empfangenen Kommunikationssignal zu ermitteln.

Eine vorteilhafte Weiterbildung ist, dass die Verarbeitungseinheit ausgebildet und eingerichtet ist, in dem erfassten Sprachsignal ein Schlüsselsignal, insbesondere Schlüssel-Sprachbefehl, zu ermitteln, insbesondere wenn ein solches vorhanden ist. Vorzugsweise kann das Schlüsselsignal als Schlüsselwort oder Schlüsselsatz oder Kombination aus mehreren Worten oder Ton oder Tonfolge oder vergleichbar ausgebildet sein. Vorteilhaft ist, dass der sich an das Schlüsselsignal anschließende Teil des Sprachsignals zumindest teilweise, insbesondere als Kommunikationssignale, an ein Sprachverarbeitungsserver zur Sprachverarbeitung gesendet wird. Vorzugsweise erfolgt das Senden an den Sprachverarbeitungsserver nur, wenn das Schlüsselsignal mit einem, insbesondere zuvor, definierten, insbesondere gespeicherten, Schlüsselsignal, insbesondere in Teilen, übereinstimmt. Vorzugsweise ergibt sich hierdurch, dass nicht ständig ein Audiostream übertragen werden muss. Stattdessen wird nur selektiv ein Sprachsignal, der insbesondere als Audiostream ausgebildet sein kann, als Kommunikationssignal übertragen, wenn das Schlüsselsignal, insbesondere das Schlüsselwort erfasst wird.

Gemäß einer vorteilhaften Weiterbildung erfolgt das Senden des Sprachsignals an den Sprachverarbeitungsserver, wenn das ermittelte Schlüsselsignal mit einem, insbesondere zuvor, definierten, insbesondere gespeicherten, Schlüsselsignal, insbesondere in Teilen, übereinstimmt.

Als eine vorteilhafte Weiterbildung ist anzusehen, dass die Vorrichtung selbst ein steuerbares Gerät darstellt. Die Vorrichtung weist beispielsweise einen Lichterzeuger auf, der die von einer Energieversorgung über die Lampenfassung zur Verfügung gestellte elektrische Energie in Licht umwandelt. Die Vorrichtung stellt damit insbesondere selbst ein Smart Home Gerät dar.

Eine vorteilhafte Weiterbildung ist, dass die Vorrichtung einen Energiespeicher, insbesondere zumindest einen Kondensator oder Akkumulator, aufweist, der ausgebildet ist, auch nach Trennung der Vorrichtung von der Energieversorgung, diese mit Energie zu versorgen. Somit kann insbesondere trotz Ausschalten des Lichts in einem Raum die Funktion der Vorrichtung weiterhin bereitgestellt werden. Vorteilhaft ist, dass der Energiespeicher als Kondensator oder als Akkumulator ausgebildet ist. Insbesondere weist der Energiespeicher Lithium, Alkali, Magnesium, Zink, Blei, Quecksilber, Silber, Nickel, Eisensulfat, Aluminium und/oder Mangan auf. Ein entsprechender Energiespeicher ist kostengünstig und kompakt. Ferner ermöglichen die Kapazität eines solchen Energiespeichers ausreichend Reserven für eine weitere Kommunikation.

Eine vorteilhafte Weiterbildung ist, dass die Verarbeitungseinheit ausgebildet ist, den Lichterzeuger in Abhängigkeit von einem erfassten oder empfangenen Steuerbefehl zu steuern, wobei insbesondere die Helligkeit und/oder die Lichtfarbe steuerbar sind.

Eine vorteilhafte Weiterbildung ist, dass die gesendeten und/oder empfangenen Kommunikationssignale und/oder Steuerbefehle verschlüsselt sind. Die Verschlüsselung verhindert das Abgreifen von Kommunikationssignale oder Steuerbefehle durch unbefugte Dritte. Eine Verschlüsselung erhöht die Sicherheit der Kommunikationsverbindung.

Eine vorteilhafte Weiterbildung ist, dass die Kommunikationseinheit ausgebildet und eingerichtet ist, mittels einer drahtlosen Funkverbindung, insbesondere eine standardisierte Funkverbindung, vorzugsweise Zigbee, Z-Wave, Bluetooth, Bluetooth Low Energy, WLAN, Enocean, DECT, Thread oder eine proprietäre Funkverbindung, zu kommunizieren.

Eine vorteilhafte Weiterbildung ist, dass der Lichterzeuger ausgebildet ist, mittels Leuchtdioden, eines Glühdrahtes und/oder eines gasförmigen Leuchtstoffes (Neonröhre) elektrische Energie in Licht umwandelt.

Weitere Merkmale der Erfindung ergeben sich aus den Figuren und sind in der nachfolgenden Beschreibung näher erläutert. Es zeigen
Figur 1 eine beispielhafte Ausführung einer erfindungsgemäßen Vorrichtung,
Figur 2 eine weitere beispielhafte Ausführung einer erfindungsgemäßen Vorrichtung, und
Figur 3 ein Blockschaltbild einer erfindungsgemäßen Vorrichtung.

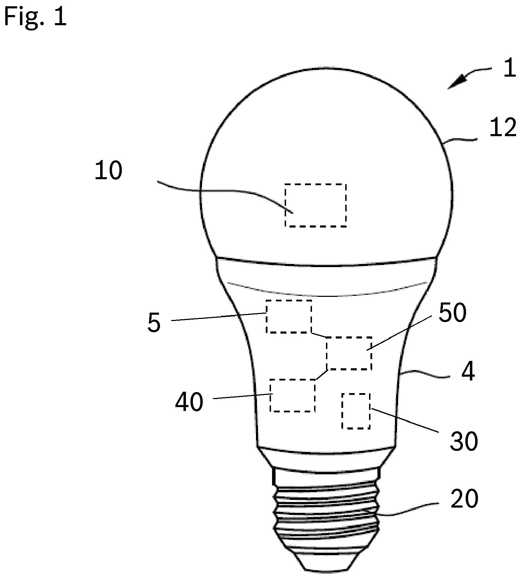

In Figur 1 ist eine erste Ausführungsform einer erfindungsgemäßen Vorrichtung 1 dargestellt. Die Vorrichtung 1 weist einen Lampensockel 20 auf. Insbesondere ist in Figur 1 ein Lampensockel 20 des Typs E27 dargestellt.

Erfindungsgemäß kann die Vorrichtung 1 beliebige Lampensockel 20 aufweisen. Beispielsweise weisen Lampensockel 20 vom Typ E 5.5, E10, E11, E12, E14, E16, E18, E27, E33 und E40 ein Gewinde auf. Weiterhin gibt es auch Lampensockel 20 mit einem Stiftsockel, wie beispielsweise G23, GX23, G24d, G24g, GX24d, GX24q, 2G11, 2G7, 2GX7, 2G10, GR8, GR10q, GRY10q-3, GRZ10d, GRZ10t, GR14q-1, GX53, S14s, S14d oder einem Röhrensockel, wie beispielsweise G5 und G 13 oder als Stiftsockel für Halogenlampen (Bipin), beispielsweise von einem der Typen G4, GU4, GY4, GZ4, G5, G5.3, G5.3-4.8, GU5.3, GX5.3, GY5.3, G6.35, GX6.35, GY6.35, GZ6.35, G8.5, G9, GU10, GZ10, G12, G38.

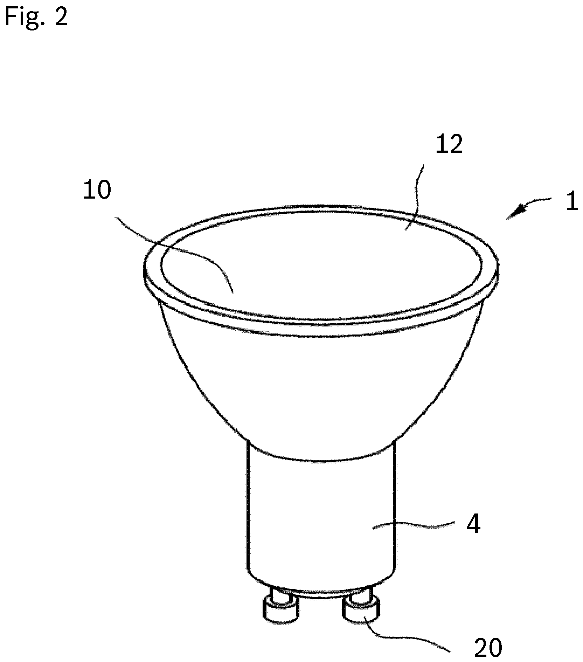

In Figur 2 ist eine alternative Ausführungsform der Vorrichtung 1 mit einem Lampensockel des Typs GU10 dargestellt. Der Lampensockel und die hierzu korrespondierende Lampenfassung 84 gemäß dem Typ GU10 werden häufig bei Spotleuchten verwendet.

Der Lampensockel 20 ist dafür vorgesehen, einen mechanischen und/oder elektrischen Kontakt zu einer Lampenfassung herzustellen.

Die Vorrichtung 1 weist große Ähnlichkeiten zu gewöhnlichen wechselbaren Leuchtelementen, wie Glühbirnen, auf die in Lampenfassungen eingedreht oder eingesteckt werden. Die Leuchtelemente weisen meist einen Lampensockel 20 auf, der in eine Lampenfassung 84 eingesteckt oder gedreht wird. Das Leuchtelement weist ein Lichterzeuger auf, welcher einen elektrischen Verbraucher darstellt, der elektrische Energie in ein für das Auge sichtbare elektromagnetische Strahlung, insbesondere Licht umwandelt.

Die Vorrichtung 1 ist daher kompatibel zu allen gängigen Lampenfassungen auslegbar.

Optional weist die Vorrichtung 1 mindestens einen Lichterzeuger 10 auf. Der Lichterzeuger 10 wandelt elektrische Energie in Licht um. Der Lichterzeuger 10 kann insbesondere als Glühlampe, als Allgebrauchslampe, als Halogenglühlampe, als Projektionslampe als Gasentladungslampen, wie Niederdruckgasentladungslampe oder Hochdruckgasentladungslampe, als Induktionslampe, als Leuchtdiode (Insbesondere mehrere Leuchtdioden) oder als Kondensator-Leuchtfolie ausgebildet sein. Es können beliebige viele Lichterzeuger 10 ausgebildet sein. Auch sind die Art und der Typ, bzw. die eingesetzte Technologie beliebig wählbar.

Vorzugsweise kann die erfindungsgemäße Vorrichtung 1 auch keinen Lichterzeuger 10 aufweisen.

Ferner umfasst das Vorrichtung 1 ein Gehäuse 4. Das Gehäuse schließt sich an den Lampensockel 20 an. Vorzugsweise ist der Lampensockel 20 Teil des Gehäuses 4. Die Lichterzeugerabdeckung 12 bildet einen Teil des Gehäuses 4

Weist die Vorrichtung einen oder mehrere optionale Lichterzeuger 10 auf, so muss das Gehäuse 4 ausgebildet sein, das von dem Lichterzeuger 10 erzeugte Licht aus dem Gehäuse 4 leuchten zu lassen. Abhängig von der Art und der Technologie des Lichterzeugers 10 weist die Vorrichtung 1, bzw. der Lichterzeuger 10 selbst eine Lichterzeugerabdeckung 12 auf. Insbesondere weisen Glüh- und Gasentladungslampe einen Glaskolben oder eine Glasröhre auf, wohingegen bei Leuchtdioden Leuchtfolien oder Kunststoff eine Lichterzeugerabdeckung 12 bilden. Die Lichterzeugerabdeckung 12 ist in Figur 1 insbesondere im Wesentlichen kugelförmig geformt. Dagegen ist sie in Figur 2 flach bzw. leicht gewölbt ausgebildet. Die Lichterzeugerabdeckung 12 verhindert ein Berühren des Lichterzeugers 10 mit einem Gegenstand oder den Fingern. Die Form der Lichterzeugerabdeckung 12 ist von dem Lichterzeuger 10, insbesondere der Art, Typ oder Leistung, aber auch von gestalterischen Einflüssen, dem Verwendungszweck oder Platzverhältnissen.

Die Vorrichtung 1 kann beispielsweise einen Lichterzeuger 10 mit jeweils einer Leuchtdiode in den Farben rot, grün, blau und weiß aufweisen. Die Lichterzeugerabdeckung 12 dient hier lediglich als Schutz bzw. sorgt für eine bessere Streuung, bzw. Verteilung des Lichts um das Vorrichtung 1.

Weiterhin weist die Vorrichtung mehrere Komponenten auf.

Die Vorrichtung weist beispielsweise eine Kommunikationseinheit 40 und eine Verarbeitungseinheit 50 auf. Auch kann ein optionaler Energiespeicher 30 vorgesehen sein. Die Kommunikationseinheit 40, die Verarbeitungseinheit 50 und der optionale Energiespeicher 30 sind zumindest in Teilen innerhalb des Gehäuses 4 angeordnet. Insbesondere können die zuvor aufgeführten Komponenten aber auch weitere Bauteile innerhalb oder im Bereich der Lichterzeugerabdeckung 12 und/oder des Lampensockels 20 angeordnet sein. Zu diesen elektronischen Bauelementen zählen insbesondere Platinen, Kabel, Prozessoren, Kondensatoren, Akkumulatoren, Widerstände, Dioden und Antennen.

Das Gehäuse 4 bildet einen Schutz vor Einflüssen aus der Umgebung, insbesondere mechanischen Einflüssen, beispielsweise Schläge, für die im Inneren der Vorrichtung 1 befindlichen elektronischen Bauelemente. Ferner bildet das Gehäuse 4 eine Art Grundgerüst in und/oder an dem die Komponenten und/oder Bauelemente angeordnet bzw. angebracht sind.

Zur Versorgung der Vorrichtung 1 mit elektrischer Energie ist der Lampensockel 20 vorgesehen. Der Lampensockel 20 ermöglicht eine elektrische Kontaktierung und eine mechanische Fixierung der Vorrichtung 1 an einer Lampenfassung 84. Die mechanische Verbindung verhindert ein ungewolltes Trennen des Versorgungsmittels 20 von dem Energieverbindungsmittel 84. Der Lampensockel 20 weist Mittel auf, welche die Herstellung einer formschlüssigen und/oder kraftschlüssigen Verbindung mit der Lampenfassung 84 erlauben. Abhängig von der Art des elektrischen Verbrauchers weist der Lampensockel 20 mehr als einen elektrischen Kontakt auf. Lampenfassungen 84 dienen zur wechselbaren und werkzeuglos elektrischen und mechanischen Kontaktierung. Die Verbindung erfolgt mittels einer lösbaren Verbindung, vorzugsweise als Stecker-Buchse-Verbindung, Schraubverbindung, Klemmverbindung. Abhängig von der Art der elektrischen Verbindung ist der Lampensockel 20 und korrespondierend zu dem Lampensockel 20 die Lampenfassung 84 ausgebildet.

Ferner ist mindestens ein Mikrofon 5 vorgesehen, welches derart in dem Gehäuse 4 angerordnet ist, dass es ein Audiosignal, insbesondere ein Sprachsignal, erfassen kann. Vorzugsweise wird nur das Sprachsignal, insbesondere die Spracheingabe, erfasst. Insbesondere werden Geräusche, die nicht aufgrund von Sprache entstehen, nicht erfasst. Insbesondere kann das Audiosignal auf Schallwellen, vorzugsweise Geräuschen, aber auch auf Sprache in der Umgebung des Mikrofons basieren.

Insbesondere weist das Gehäuse 4 eine oder mehrere Ausnehmungen auf, die jeweils zulassen, dass die Schallwellen zu dem Mikrofon 5 gelangen.

Die erfassten Sprachsignale enthalten insbesondere auch Spracheingaben und/oder bilden Spracheingaben. Das Mikrofon 5 wandelt die Schallwellen in elektrische Signale um. Das Mikrofon 5 ist ausgebildet und eingerichtet Sprachsignale zu erfassen. Das Mikrofon 5 leitet die erfassten Sprachsignale, insbesondere als elektrisches Signal, an die Verarbeitungseinheit 50 weiter.

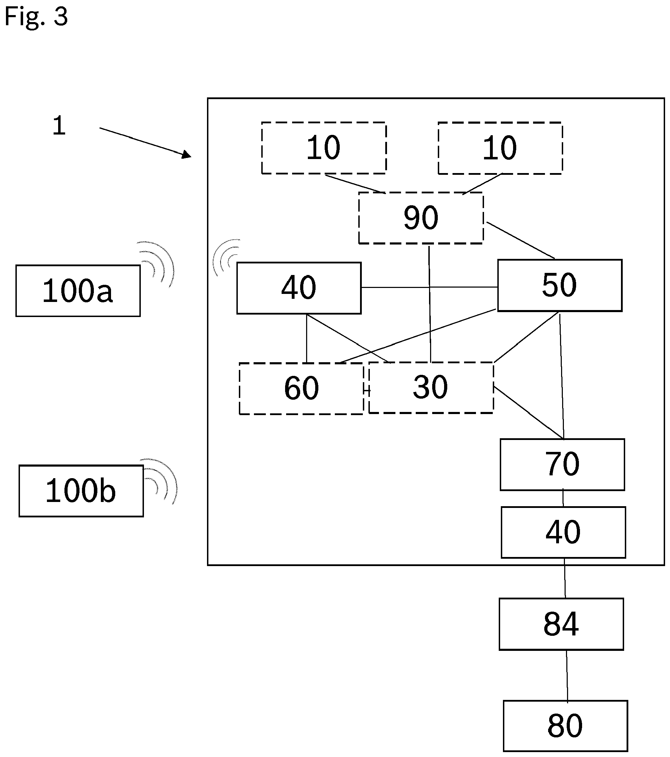

In Figur 3 ist ein Blockschaltbild, welches den schematischen Aufbau einer erfindungsgemäßen Vorrichtung 1 verdeutlicht, dargestellt. Die Vorrichtung 1 weist die Kommunikationseinheit 40, die Verarbeitungseinheit 50, das mindestens eine Mikrofon 5, einen optionalen Lichterzeuger 10 mit einem optionalen Treiber 90, einen optionalen Energiespeicher 30 auf.

Optional ist ein Treiber 90 ausgebildet, wenn ein oder mehrere Lichterzeuger 10 ausgebildet sind. Der Treiber 90 steuert die Lichterzeuger 10 in Abhängigkeit von Steuerbefehlen, die er von der Verarbeitungseinheit 50 erhält. Insbesondere kann der Treiber 90 den Lichterzeuger 10 von einer Energieversorgung 80 trennen und/oder die Helligkeit und/oder die Farbe des erzeugten Lichts variieren. Der Treiber 90 weist Schaltelemente auf, die das elektrische Trennen, bzw. Unterbrechen oder Verbindung des Lichterzeugers 10 von der Energieversorgung 80 ermöglichen. Insbesondere sind diese Schaltmittel als MosFets, Transistoren oder Relais ausgebildet.

Insbesondere können verschiedene Lichtfarben erzeugt werden, wenn beispielsweise eine rote, eine grüne und eine blaue Leuchtdiode im Lichterzeuger 10 kombiniert oder entsprechende Lichterzeuger 10 vorhanden sind. Vorzugsweise sind einzelnen Leuchtdioden miteinander kombiniert, um das erzeugte Licht gut zu mischen und damit bei entsprechender Ansteuerung der einzelnen Leuchtdioden durch das Verarbeitungseinheit 50 beliebige Farben zu erzeugen.

Erfindungsgemäß kann hierbei die Anzahl und Art der Lichterzeuger 10 variiert und in beliebiger Weise kombiniert werden. In Figur 3 sind beispielhaft zwei Lichterzeuger 10 dargestellt.

Optional ist ein Spannungswandler 70 vorgesehen, welcher die von der Energieversorgung 80 über die Lampenfassung 84 und den Lampensockel 20 bereitgestellte Spannung umwandelt, insbesondere transformiert oder regelt. Ferner kann der Spannungswandler 70 auch den Strom anpassen. Der Spannungswandler 70 ist insbesondere als Netzteil oder Transformator ausgebildet oder umfasst ein Netzteil oder Transformator. Der Spannungswandler 70 versorgt die weiteren Komponenten der Vorrichtung 1 mit der richtigen Spannung. Der Spannungswandler versorgt insbesondere auch den oder die Lichterzeuger 10 über den Treiber 90.

Eine Kommunikationseinheit 40 ermöglicht die Kommunikation, insbesondere das Senden und Empfangen von Nachrichten, Steuerbefehlen, Signalen, insbesondere Sprachsignalen und/oder Kommunikationssignale von oder an ein steuerbares Gerät 100b und/oder einen Sprachverarbeitungsserver 100a.

Die Kommunikation mit dem Sprachverarbeitungsserver 100a erfolgt insbesondere über das Internet. Die Funksymbole in der Figur sind beispielsweise zur Verdeutlichung, dass hier eine Kommunikation abläuft.

Bei dem steuerbaren Gerät 100b handelt es sich insbesondere um ein Smart Home Gerät. Zur Kommunikation und dem Austausch von Kommunikationssignalen und Steuerbefehlen wird insbesondere eine Kommunikationsverbindung zwischen der Kommunikationseinheit 40 und dem Gerät 100 aufgebaut. Die Kommunikationsverbindung muss jedoch nicht zwangsläufig direkt bestehen, insbesondere kann die Kommunikationsverbindung über einen Router, einen Server oder einen Switch oder das Internet erfolgen.

Ferner kann die Kommunikationseinheit 40 mit dem steuerbaren Gerät 100b und/oder dem Sprachverarbeitungsserver 100a mittels einer drahtgebundenen oder einer drahtlosen Kommunikationsverbindung kommunizieren.

Drahtgebundene Verbindungen können hierbei insbesondere über LAN, CAN, Glasfaser erfolgen. Auch kann die Kommunikation über das Internet oder ein vergleichbares Netzwerk vorzugsweise in Teilen ablaufen. Drahtlose Verbindungen können insbesondere über eine standardisierte Funkverbindung, vorzugsweise Zigbee, Z-Wave, Bluetooth, Bluetooth Low Energy, WLAN, Enocean, DECT, Thread oder eine proprietäre Funkverbindung erfolgen oder über weitere drahtlose Verbindungsverfahren, insbesondere optische, vorzugsweise mittels Lichts, wie Infrarotlicht.

Das Kommunikationsmittel 40 weist entsprechende Sende- und Empfangsmittel wie beispielsweise einen Signalverstärker, eine Frequenzweiche, eine Antenne, einen Signalfilter auf, die ein Senden und/oder Empfangen ermöglichen. Vorzugsweise kann das Kommunikationsmittel 40 gleichzeitig mit mehreren Geräten 100 Kommunizieren.

Insbesondere gleichzeitig oder versetzt kann es mit einem Smart Home Gerät 100b oder einem mobilen Gerät kommunizieren. Steuerbare Geräte 100b können insbesondere Mobiltelefone, Tabletts, Computer, Server, Router, Gateways, Switches, aber auch Smart-Home-Geräte, wie insbesondere Aktoren, Sensoren, HVAC System, Küchengeräte, Fernseher, Vorrichtung, aber auch Werkzeuge und Home-Automations-Server. Ferner können weitere erfindungsgemäße Vorrichtung 1 steuerbare Geräte 100b bilden. Es ist auch eine Kommunikation zwischen den einzelnen Vorrichtungen 1 möglich.

Die Kommunikationseinheit 40 wirkt mit der Verarbeitungseinheit 50 zusammen. Hierzu ist die Kommunikationseinheit 40 mit der Verarbeitungseinheit 50, insbesondere elektrisch, vorzugsweise drahtgebunden, verbunden. Auch ist möglich, dass die Verarbeitungseinheit 50 und die Kommunikationseinheit 40 mittels einer Funkverbindung oder Licht miteinander kommunizieren.

Die Verarbeitungseinheit 50 empfängt von dem Mikrofon 5 ein erfasstes Sprachsignal, insbesondere eine Spracheingabe. Das Sprachsignal, insbesondere die Spracheingabe, weist vorzugsweise eine Anforderung auf. die Anforderung enthält einen Steuerbefehl für ein steuerbares Gerät 100b und/oder eine Auswahl zumindest eines steuerbaren Geräts 100b. Vorzugswiese leitet das Mikrofon 5 das Sprachsignal weiter, sobald es ein solches erfasst. Vorzugsweise "entscheidet" das Mikrofon 5 lediglich anhand der Lautstärke des erfassten Audiosignals und/oder vergleichbaren Paramater, ob gesprochen wird oder lediglich ein Geräusch vorliegt. Die eigentliche Auswertung des erfassten Sprachsignals auf Sprache, insbesondere Anforderungen, erfolgt durch die Verarbeitungseinheit 50 und/oder den Sprachverarbeitungsserver.

Gemäß einer ersten Ausführungsform der Verarbeitungseinheit 50 ist diese ausgebildet und eingerichtet das empfangene Sprachsignal zu verarbeiten. Insbesondere ermittelt die Verarbeitungseinheit 50 aus dem Sprachsignal eine Anforderung mittels Sprachverarbeitung. Die Verarbeitungseinheit 50 weist zur Sprachverarbeitung entsprechende Mikroprozessoren und/oder Software auf. Das Sprachsignal weist Anforderungen auf. Die Sprachverarbeitung ermittelt aus dem Sprachsignal Steuerbefehle und/oder eine Geräteauswahl, wenn vorhanden. Aus den ermittelten Anforderungen werden mittels Sprachverarbeitung Steuerbefehle ermittelt und an ausgewählte steuerbare Geräte 100b, insbesondere Geräte eines Smart Homes gesendet. Ist die Vorrichtung 1 selbst der Adressat der Anforderung, so wird der Steuerbefehl direkt ausgeführt und vorzugsweise nicht versendet. Es ist möglich beispielsweise mittels Sprache ein An-, Aus- oder umschalten eines Smart Home Geräts zu ermöglichen.

Die ermittelten Anforderungen werden in Steuerbefehle umgewandelt. Die Steuerbefehle enthalten vorzugsweise neben der Steuerinformation auch einen Adressaten. Der Adressat wird anhand der Auswahl eines steuerbaren Geräts 100b ermittelt. Ist der Adressat der optionale Lichterzeuger 10, so wird der Steuerbefehl direkt an diesen gesendet. Handelt es sich bei dem Adressaten um ein steuerbares Gerät 100b, beispielsweise ein Smart Home Gerät, so wird der Steuerbefehl mittels der Kommunikationseinheit 40 an das Gerät 100b gesendet.

Ein Sprachbefehl kann beispielsweise wie folgt lauten: "Bitte das Licht im Flur löschen." Dieser wird als Sprachsignal aufgenommen, insbesondere erfasst. Das Sprachsignal enthält die Anforderung. Die Anforderung ist, dass das Licht im Flur gelöscht, also ausgeschalten werden soll. Der Steuerbefehl ist das Licht auszuschalten. Der Adressat ist der Aktor, der das Licht im Flur schaltet. Somit wird das steuerbare Gerät, welches das Licht im Flur schaltet, ausgewählt.

Gemäß einer weiteren Ausführungsform der Verarbeitungseinheit 50 werden die erfassten Sprachsignale zur Sprachverarbeitung an einen Sprachverarbeitungsserver 100a gesendet. Der Sprachverarbeitungsserver 100a kann beispielsweise ein Sever oder ein Cloud-System oder eine vergleichbare zentrale Recheneinheit sein. Er ist ausgebildet und eingerichtet die Sprachverarbeitung für mehr als eine Vorrichtung durchzuführen.

Die Sprachsignale werden in Kommunikationssignale umgewandelt. Die Kommunikationseinheit 40 übernimmt diese Umwandlung. Das Umwandeln umfasst insbesondere Filtern und/oder Selektieren und/oder codieren. Beim Filtern werden überflüssige Information, wie beispielsweise Rauschen oder Stimmen im Hintergrund gelöscht. Beim Selektieren werden nur einzelnen Teile, insbesondere zeitlich begrenzt umgewandelt. Beim Codieren wird der sich ergebende Stream oder die sich ergebene Datei minimiert, um insbesondere die Bandbreite bei der Übertragung zu reduzieren.

Die Auswertung der Spracherkennung erfolgt durch den Sprachverarbeitungsserver aus dem Kommunikationsaudiosignal. Der Sprachverarbeitungsserver ist hierbei als Server oder Cloud oder dergleichen ausgebildet. Insbesondere ermittelt die Verarbeitungseinheit 50 aus dem Sprachsignal eine Anforderung mittels Sprachverarbeitung.

Hat der Sprachverarbeitungsserver einen Steuerbefehl ermittelt, so sendet es diesen zurück. Die Kommunikationseinheit 40 empfängt diese und leitet sie an die Verarbeitungseinheit 50 weiter. Die Verteilung des Steuerbefehls erfolgt gleich wie bei der ersten Ausführungsform.

Hat der Sprachverarbeitungsserver einen Steuerbefehl und einen Adressaten ermittelt, so sendet es diese Informationen zurück. Die Kommunikationseinheit 40 empfängt diese und leitet sie an die Verarbeitungseinheit 50 weiter. Die Verteilung von dem Steuerbefehl erfolgt gleich wie bei der ersten Ausführungsform.

Alternativ oder zusätzlich kann der Sprachverarbeitungsserver den Steuerbefehl auch direkt an das adressierte steuerbare Gerät 100b senden.

In einer weiteren Ausführungsform der Verarbeitungseinheit 50 weist die Verarbeitungseinheit 50 eine reduzieret Sprachverarbeitung auf. Diese ermöglicht es die erfassten und weitergeleiteten Sprachsignale auf ein Schlüsselsignal zu untersuchen. Das Schlüsselsignal kann ein Befehl aber auch ein Name oder ein Begriff sein. Vorzugsweise kann das Schlüsselsignal auch ein Wort, insbesondere ein Begriff, oder ein Satz oder eine Kombination aus mehreren Worten sein. Wird das Schlüsselsignal erfasst, so wird der sich daran anschließende Audiostream, insbesondere das Sprachsignal entsprechend der zweiten Ausführungsform verarbeitet und als Kommunikationsaudiosignal weitergeleitet. Vorzugsweise erfolgt ein Senden des erfassten Sprachsignals, wenn das Schlüsselsignal erkannt wird. Das Senden des Sprachsignals kann mit oder ohne Schlüsselsignal erfolgen. Wie in der zweiten Ausführungsform übernimmt ein Gerät, insbesondere ein Sprachverarbeitungsserver oder -Cloud die Sprachverarbeitung. Auch der erzeugte Sprachbefehl wird entsprechend der zweiten Ausführungsform gehandhabt. Vorteil an dieser Ausführungsform ist, dass nicht durchgängig ein Sprachsignal, insbesondere ein Audiostream, übertragen wird. Vorzugsweise wird mittels dem Schlüsselsignal verhindert, dass jegliches Sprachsignal weitergleitet und analysiert wird.

Vorzugsweise erfolgt das Untersuchen des Sprachsignals auf ein Schlüsselsignal durch das Vergleichen des erfassten Sprachsignals mit einem definierten, insbesondere gespeicherten Schlüsselsignal.

Optional weist die Vorrichtung 1 einen Energiespeicher 30 auf, der es ihr ermöglicht, dass trotz einer Trennung der Vorrichtung 1 von der Energieversorgung 80 weiterhin zu kommunizieren und/oder Sprachsignale zu erfassen und zu verarbeiten. Der Energiespeicher 30 ist hierzu insbesondere als Kondensator, Batterie, Akkumulator oder als ein auf Lithium, Mangan, Magnesium oder Alkali basierten Energiespeicher 30 ausgebildet. Der Energiespeicher 30 stellt der Kommunikationseinheit 40 und der Verarbeitungseinheit 50 und dem Mikrofon 5 für eine begrenzte Zeit, vorzugsweise für den gesamten Zeitraum, in dem die Vorrichtung 1 von der Energieversorgung 80 getrennt ist, ausreichend Energie zur Verfügung um eine Kommunikation mit einem steuerbaren Gerät 100b und/oder einem Sprachverarbeitungsserver 100a und/oder die Erfassung von Sprachsignalen aufrecht zu halten. Der Energiespeicher 30 ist innerhalb der Vorrichtung 1, insbesondere dem Gehäuse 4 des Vorrichtung 1 angeordnet. Insbesondere genügt die Energie des Energiespeichers 30 zur Versorgung der Kommunikationseinheit 40, beispielsweise um eine bestehende Kommunikationsverbindung zu schließen und/oder das Vorrichtung 1 von einem steuerbaren Gerät 100b und/oder einem Sprachverarbeitungsserver 100a abzumelden.

Gemäß einer Weiterbildung reicht eine in dem Energiespeicher 30 gespeicherte Energiemenge im Wesentlichen nur für das Senden und/oder Empfangen von Kommunikationssignalen und/oder Steuerbefehlen durch die Kommunikationseinheit 40, sowie insbesondere das Verarbeiten der Kommunikationssignale und/oder Steuerbefehle aus. Insbesondere wird die Energie des Energiespeichers 30 lediglich für das Senden, Empfangen und Verarbeiten der Nachrichten verwendet. Gemäß einer Weiterbildung reicht die Energie des Energiespeichers 30 lediglich für das Senden von Nachrichten, insbesondere einer Nachricht, die die Vorrichtung 1 bei zumindest einem steuerbaren Gerät 100b und/oder einem Sprachverarbeitungsserver 100a abmeldet.

Der Energiespeicher 30 wird geladen, wenn die Vorrichtung 1 mit der Energieversorgung 80 verbunden ist. Insbesondere weist hierzu das Vorrichtung 1, vorzugsweise die Kommunikationseinheit 40 eine Ladeelektronik 60 auf. Die Ladeelektronik 60 prüft den Ladezustand des Energiespeichers 30 und informiert bei einer geringen Ladung die Kommunikationseinheit 40, woraufhin diese beispielsweise eine letzte Kommunikation auslösen kann oder eine bestehenden Kommunikationsverbindung entsprechend eines Kommunikationsprotokolls schließt. Wird die Energieversorgung 80 getrennt, sinkt der Ladezustand des Energiespeichers 30 mit der Zeit. Sobald ein voreingestellter Grenzwert, insbesondere 80% erreicht wird, kann auf eine Trennung der Vorrichtung 1 von der Energieversorgung 80 ausgegangen werden.

Ferner weist das erfindungsgemäße Vorrichtung 1 optional, zusätzlich oder alternativ zu der Ladeelektronik 60 eine Detektionseinheit 60 auf. Die Detektionseinheit 60 erfasst insbesondere den Strom, die Spannung und/oder die Frequenz der Energieversorgung 80 bzw. das Vorhandensein einer Energieversorgung 80. Wird beispielsweise die Energieversorgung 80 durch ein Öffnen eines Schalters 82, der sich zwischen der Energieversorgung 80 und dem Versorgungsmittel 20 befindet, unterbrochen, so erkennt dies die Detektionseinheit 60 und informiert die Kommunikationseinheit 40 über die Unterbrechung.

Eine Erkennung erfolgt insbesondere durch die Abtastung des Spannungs- und/oder Stromverlaufs, insbesondere anhand einer Überwachung auf Spannungsschwankungen. Auch kann eine Zustandsänderung über den Ladezustand des Energiespeichers 30 erfolgen. Solange das Vorrichtung 1 mit der Energieversorgung 80 verbunden ist, kommt es zu keiner Entladung.

Erkennt die Detektionseinheit 60 die Trennung der Vorrichtung 1 von der Energieversorgung 80, so informiert die Detektionseinheit 60 die Kommunikationseinheit 40 und die Verarbeitungseinheit 50. Die Kommunikationseinheit 40 könnte beispielsweise daraufhin eine Information, dass das Vorrichtung 1 von der Energieversorgung 80 getrennt wurde, an ein mit ihr verbundenes steuerbares Gerät 100b und/oder einen Sprachverarbeitungsserver 100a senden. Insbesondere sendet die Kommunikationseinheit 40 die Information, dass sie getrennt wurde und aufgrund eines zukünftig absehbaren Energiemangels demnächst nicht mehr kommunizieren wird. Auch kann die Kommunikationseinheit 40 beim Erkennen einer Trennung der Vorrichtung 1 von der Energieversorgung 80 seine gespeicherten Nachrichten, insbesondere als eine Art Backup an ein steuerbares Gerät 100b und/oder einem Sprachverarbeitungsserver 100a oder an eine weitere Vorrichtung 1 übermitteln.

## Patentansprüche

1. Vorrichtung (1) mit einem Lampensockel (20), wobei der Lampensockel vorgesehen ist, einen mechanischen und elektrischen Kontakt zu einer Lampenfassung herzustellen, und wobei die Vorrichtung (1) eine Kommunikationseinheit (40) zum drahtlosen oder drahtgebundenen Kommunizieren aufweist, **dadurch gekennzeichnet, dass** die Vorrichtung (1) eine Verarbeitungseinheit (50) und zumindest ein Mikrofon (5) aufweist, wobei das mindestens eine Mikrofon (5) ausgebildet und eingerichtet ist ein Sprachsignal zu erfassen und dieses an die Verarbeitungseinheit (50) zur Sprachverarbeitung weiterzuleiten.

2. Vorrichtung (1) nach dem vorhergehenden Anspruch, **dadurch gekennzeichnet, dass** die Verarbeitungseinheit (50) mittels der Sprachverarbeitung ausgebildet und eingerichtet ist, aus dem erfassten Sprachsignal eine Anforderung zu ermitteln, wobei die Anforderung einen Steuerbefehl für ein steuerbares Gerät (100b) und/oder eine Auswahl zumindest eines steuerbaren Geräts (100b) enthält, und wobei die Verarbeitungseinheit (50) ausgebildet und eingerichtet ist, die Anforderung mittels der Kommunikationseinheit (40), an das, insbesondere enthaltene, ausgewählte Gerät (100b), insbesondere ein Smart Home Gerät, zu senden, und dass die Verarbeitungseinheit (50) insbesondere einen Mikroprozessor zur Sprachverarbeitung aufweist.

3. Vorrichtung (1) nach einem der vorhergehenden Ansprüche, **dadurch gekennzeichnet, dass** die Verarbeitungseinheit (50) ausgebildet ist, die erfassten Sprachsignale mittels der Kommunikationseinheit (40) in zumindest ein Kommunikationssignal umzuwandeln, insbesondere mittels Filtern und/oder Selektion und/oder Codierung, und das umgewandelte Kommunikationssignal mittels der Kommunikationseinheit (40) an zumindest ein Sprachverarbeitungsserver (100a) zur Sprachverarbeitung, insbesondere einen Server oder ein Cloud-System, zu senden, welcher insbesondere ausgebildet und eingerichtet ist, Anforderungen aus dem empfangenen Kommunikationssignal zu ermitteln, wobei die Anforderung einen Steuerbefehl für ein steuerbares Gerät (100b) und/oder eine Auswahl zumindest eines steuerbaren Geräts (100b) enthält.

4. Vorrichtung (1) nach einem der vorhergehenden Ansprüche, **dadurch gekennzeichnet, dass** die Verarbeitungseinheit (50) ausgebildet und eingerichtet ist, in dem erfassten Sprachsignal ein Schlüsselsignal, insbesondere Schlüssel-Sprachbefehl, zu ermitteln, und dass der sich an das Schlüsselsignal anschließende Teil des Sprachsignals zumindest teilweise, insbesondere umgewandelt in ein Kommunikationssignal, an den Sprachverarbeitungsserver (100a) zur Sprachverarbeitung zu senden.

5. Vorrichtung (1) nach einem der vorhergehenden Ansprüche, **dadurch gekennzeichnet, dass** die Vorrichtung (1) selbst ein steuerbares Gerät darstellt, und dass die Vorrichtung (1) einen Lichterzeuger (10) aufweist, der die von einer Energieversorgung (80) über die Lampenfassung zur Verfügung gestellte elektrische Energie in Licht umwandelt.

6. Vorrichtung (1) nach einem der vorhergehenden Ansprüche, **dadurch gekennzeichnet, dass** die Vorrichtung (1) einen Energiespeicher (30), insbesondere zumindest einen Kondensator oder Akkumulator, aufweist, der ausgebildet ist, auch nach Trennung der Vorrichtung (1) von der Energieversorgung (80) diese mit Energie zu versorgen.

7. Vorrichtung (1) nach dem vorhergehenden Anspruch, **dadurch gekennzeichnet, dass** das Verarbeitungseinheit (50) ausgebildet ist, den Lichterzeuger (10) in Abhängigkeit von einem erfassten oder empfangenen Steuerbefehl zu steuern, wobei insbesondere die Helligkeit und/oder die Lichtfarbe steuerbar sind.

8. Vorrichtung (1) nach einem der vorhergehenden Ansprüche, **dadurch gekennzeichnet, dass** die gesendeten und/oder empfangenen Kommunikationssignale und/oder Steuerbefehle verschlüsselt sind.

9. Vorrichtung (1) nach einem der vorhergehenden Ansprüche, **dadurch gekennzeichnet, dass** die Kommunikationseinheit (40) ausgebildet und eingerichtet ist, mittels einer drahtlosen Funkverbindung, insbesondere eine standardisierte Funkverbindung, vorzugsweise Zigbee, Z-Wave, Bluetooth, Bluetooth Low Energy, WLAN, Enocean, DECT, Thread oder eine proprietäre Funkverbindung, zu kommunizieren.

10. Vorrichtung (1) nach einem der vorhergehenden Ansprüche, **dadurch gekennzeichnet, dass** der Lichterzeuger (10) ausgebildet ist, mittels Leuchtdioden, eines Glühdrahtes und/oder eines gasförmigen Leuchtstoffes (Neonröhre) elektrische Energie in Licht umwandelt.
